# EUROPEAN PATENT APPLICATION

(11) **EP 1 468 779 A1**
(43) Date of publication of application: **20.10.2004**
(21) Application number: 04460004.7
(22) Date of filing: 05.04.2004
(51) Int. Cl.: B23Q 1/26

(54) **Adjustment of slideway tightness in drilling machines**

(30) Priority: 14.04.2003 PL 35938603
(71) Applicant: " Promotech"- Spolka zo.o, 15-620 Bialystok (PL)
(72) Inventor: Dobrogowski, Miroslaw Julian, 15-135 Bialystok (PL); Golabiewski, Zbigniew, 15-351 Bialystok (PL); Zaleski, Bohdan, 05-500 Piaseczno (PL); Horodenski, Witold, 15-161 Bialystok (PL); Alfut, Eugeniusz, 12-227 Bialystok (PL)

(57) **Abstract**

Adjustment of slideway tightness in electric drilling machines particularly those with electromagnetic base, where electromagnetic forces are used to fix the drilling unit on the steel part which is being drilled or milled is characterized by the fact that the slide&pressure plate 1 has on the slidewaz 2 side of the frame 3 at least one hole 6 where spring loaded elements 7 are pressing against slideway 2 of the frame 3

## Description

The following invention is an adjustment assembly of slideway's tightness used particularly in electromagnetic drilling machines which can be fixed electromagnetically to steel on jobs such as drilling/milling of steel structures.

This kind of assembly is known from the notification of Polish Registered Pattern ( model) No U1 111887 titled " Stojak wiertarki elektrycznej ( "The electric drill stand"). According to that pattern, above assembly comprises of: slide&pressure plate located between stationary slide of machine's frame and moving slideway. The slide&pressure plate presses with its slant surface against the moving slideway and on the other side is positioned by adjustment screws which sit in tapped holes which are on the side of machine's frame.

The main idea of the invention is that the slide&pressure plate has on the side of the stationary slide of the machine's frame at least one hole, with spring loaded elements pressing against that stationary slide of machine's frame. There is also a resistance plate which is located between the spring loaded elements and machine's stationary slide. The slide&pressure plate is fixed to the stationary slide with positioning screws.

This assembly allows easy and precise adjustment of slideway tightness in drilling machines.

The above invention is shown in following drawings:

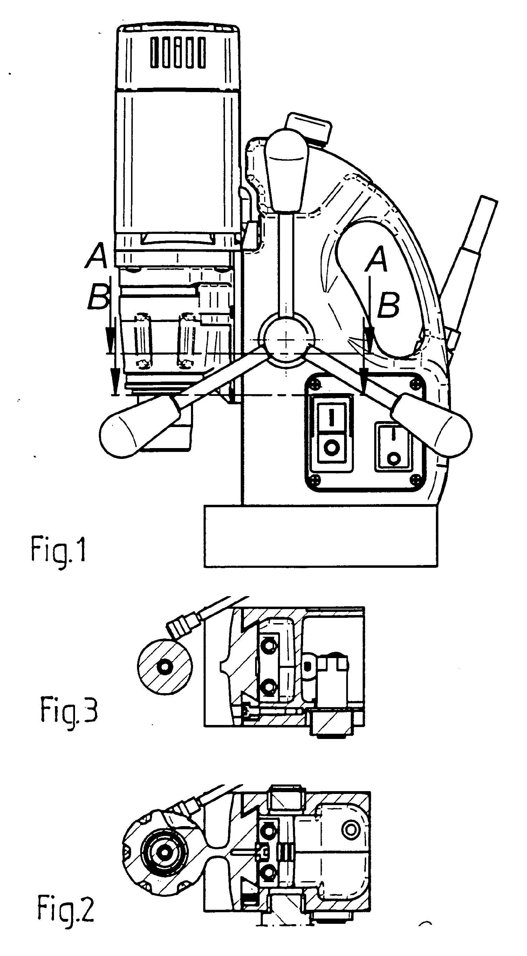

- Drawing 1 is showing side view of drilling machine.
- Drawing 2 is showing cross section of drilling machine in A-A plane
- Drawing 3 is showing cross section of drilling machine in B-B plane.

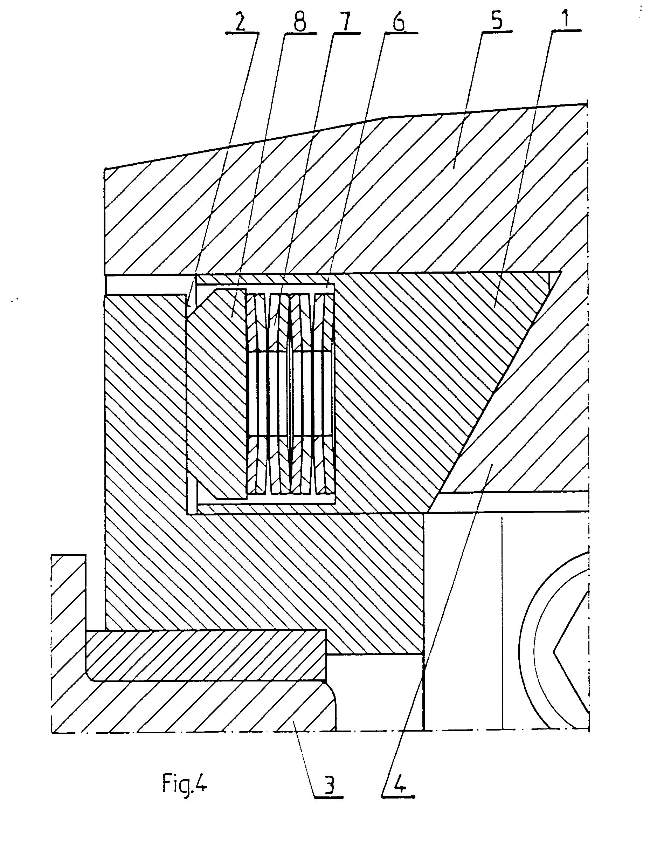

- Drawing 4 is showing enlarged detail view of cross section in A-A plane.

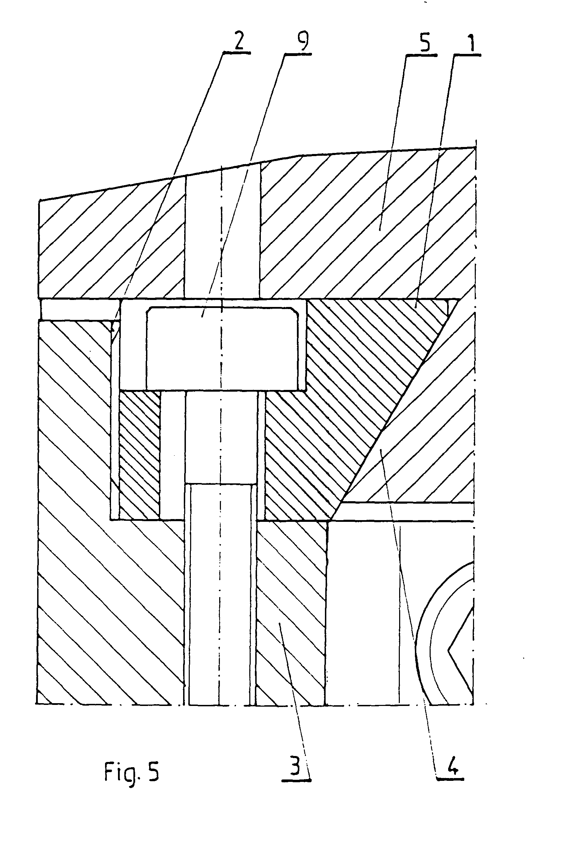

- Drawing 5 is showing enlarged detail view of cross section in B-B plane

In this invention the assembly for adjustment of slideway tightness consists of:
Slide&pressure plate (1) located between stationary slide (2) of machine frame (3) and slant slideway (4) of machine's moving slide (5). The slide&pressure plate 1, has on it's side of stationary slide 2 of frame 3, at least one hole 6, where spring loaded elements 7 are pressing against a resistance plate 8, which is located on the slide 2 of frame 3.
On the opposite side the slide&pressure plate 1, is pressing with its slant side against the slideway 4 of the moving slide 5. The slide&pressure plate 1 is fixed to the stationary slide 2 of the frame 3 with positioning screws 9.
Adjustment screws 9, can be used to cancel any play in moving slide, which can arise as a result of machine's wear. To cancel unwanted play, the spring loaded elements are used, and in order to set required tightness the stationary slide 2 can be locked with positioning screws 9.

## Claims

1. Adjustment of slideway tightness in electric drilling machines, particularly those with electromagnetic base where electromagnetic forces are used to fix the drilling unit on the steel part which is being drilled or milled. That adjustment of slideway tightness consists of: slide&pressure plate located between the stationary slideway of the frame and slant moving slideway where the slide&pressure plate is pressing with its slant side against the slideway and with on other side is supported by a set of adjustment screws located in tapped holes which are on the side of the frame and all **characterized by** the slide&pressure plate 1 has on the slideway 2 side of the frame 3, at least one hole 6 where spring loaded elements 7 are pressing against slideway 2 of the frame 3.

2. Adjustment of slideway tightness according to claim 1 **characterized in that** between the spring loaded elements 7 and the slideawy 2 of the frame 3 there is a resistance plate 8.

3. Adjustment of slideway tightness according to claim 1 **characterized in that** the slide&pressure plate 1 is fixed to the stationary slide 2 of the frame 3 with positioning screws 9.
